(19) Europäisches Patentamt
European Patent Office
Office européen des brevets

(11) Veröffentlichungsnummer : **0 155 532**
**B1**

(12) **EUROPÄISCHE PATENTSCHRIFT**

(45) Veröffentlichungstag der Patentschrift : **12.11.86**

(51) Int. Cl.⁴ : **G 11 B 5/708**

(21) Anmeldenummer : **85101952.1**

(22) Anmeldetag : **22.02.85**

(54) **Magnetische Aufzeichnungsträger.**

(30) Priorität : **02.03.84 DE 3407721**

(43) Veröffentlichungstag der Anmeldung : **25.09.85 Patentblatt 85/39**

(45) Bekanntmachung des Hinweises auf die Patenterteilung : **12.11.86 Patentblatt 86/46**

(84) Benannte Vertragsstaaten : **DE FR GB NL**

(56) Entgegenhaltungen :
**DE-A- 2 231 138**
**DE-A- 2 254 981**
**DE-A- 3 128 005**
**DE-A- 3 211 779**
**DE-A- 3 217 209**

(73) Patentinhaber : **BASF Aktiengesellschaft**
**Carl-Bosch-Strasse 38**
**D-6700 Ludwigshafen (DE)**

(72) Erfinder : **Balz, Werner, Dr.**
**Kropsburgstrasse 44**
**D-6703 Limburgerhof (DE)**
Erfinder : **Kovacs, Jenoe, Dr.**
**Kantstrasse 9**
**D-6717 Hessheim (DE)**
Erfinder : **Muenzner, Wulf, Dr. Dipl-Ing.**
**Lorscher Ring 10**
**D-6710 Frankenthal (DE)**
Erfinder : **Roller, Hermann**
**Schwedlerstrasse 118**
**D-6700 Ludwigshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft magnetische Aufzeichnungsträger, die aus einem nichtmagnetischen Trägermaterial und einer darauf haftfest aufgebrachten Magnetschicht bestehen, wobei die Magnetschicht neben ferromagnetischem Metallpulver, organischem Bindemittel, Metalloxidpulver und den üblichen Hilfsmitteln noch weitere Zusatzstoffe enthält.

Bei der Herstellung von magnetischen Aufzeichnungsträgern, welche aus einem meist flexiblen Trägermaterial und einer Magnetschicht aus einem magnetischen Pulver und einem dieses Pulver umhüllenden organischen Bindemittel bestehen, werden in zunehmenden Maße ferromagnetische Metallpulver als magnetisches Material anstelle der üblichen oxidischen Stoffe eingesetzt. Ferromagnetische Pulver, z. B. auf der Basis von Eisen oder Eisen-Kobalt-Legierungen zeichnen sich gegenüber den oxidischen Magnetwerkstoffen, wie Gamma-Eisen(III) oxid oder auch Chromdioxid, durch eine größere Koerzitivfeldstärke und eine höhere remanente Magnetisierung aus. Dies ermöglicht die Herstellung von magnetischen Aufzeichnungsträgern, welche sowohl für hohe Aufzeichnungsdichten geeignet sind als auch einen verbesserten Signal-Rausch-Abstand aufweisen. Bei derartig aufgebauten Magnetschichten ist jedoch im Vergleich zu solchen mit oxidischen magnetischen Materialien die Widerstandsfähigkeit der Schichtoberfläche gegen Abrieb meist zu gering. Dies bewirkt insbesondere bei Videobändern ein schlechtes Dauerlaufverhalten, eine Beschädigung der Schicht bei der Berührung mit den Magnetköpfen und anderen Führungsteilen sowie ein Verschmieren oder sogar ein Zusetzen des Magnetkopfes durch Schichtabrieb.

Um diese Nachteile zu beheben wurde mehrfach vorgeschlagen, die Härte der Schicht durch den Zusatz von harten nichtmagnetischen Oxidteilchen anzuheben. So beschreibt die DE-OS 32 11 780 den Zusatz von Schleifmitteln mit einer Mohs-Härte von mindestens 6 zur Verbesserung der Lebensdauer der Magnetschicht. Als Schleifmittel wurden neben alpha-Eisen(III) oxid Aluminiumoxid, Siliciumoxid, Chromoxid, Siliciumkarbid und andere vorgeschlagen. Auf diese Weise wird zwar eine erhöhte Festigkeit der Magnetschicht erzielt, aber der Zusatz dieser Schleifteilchen führt zu einem erhöhten Abrieb des Magnetkopfes.

Um nun einerseits die Abriebsfestigkeit der Magnetschicht anzuheben und andererseits auch die Abriebwirkung der Schicht auf den Magnetkopf einzudämmen, wurde eine Reihe von Maßnahmen vorgeschlagen. So soll gemäß der De-OS 31 28 005 sowie der DE-OS 32 17 209 eine Kombination verschiedener nichtmagnetischer, harter, feinkörniger Pulver mit einer Mohs'schen Härte von mindestens 6 diese Vorgabe ermöglichen. Auch der Zusatz einer Fettsäure und eines Fettsäureesters neben dem Schleifmaterial wurde bereits beschrieben (DE-OS 32 11 779), ebenso wie die weitere Kombination und Calciumcarbonat (DE-OS 32 03 601) oder die Abmischung der verschleißfesten Metalloxide mit Ethylenstearylbiamid (DE-PS 30 24 078). Alle diese Vorschläge zum Lösen des Problems von einerseits Abriebfestigkeit der Magnetschicht und andererseits Verminderung des Kopfabriebs sind zwar hierfür geeignet, sie befriedigen jedoch nicht, wenn die gesamten Eigenschaften des magnetischen Aufzeichnungsträgers, wie die mechanischen, die elektroakustischen bzw. Video-Eigenschaften sowie die Wechselwirkungen mit dem Aufzeichnungs/Wiedergabegerät, in Betracht gezogen werden.

Aufgabe der Erfindung war es daher, magnetische Aufzeichnungsträger bereitzustellen, deren Magnetschicht so aufgebaut ist, daß sie sowohl in ihrer mechanischen Widerstandsfestigkeit, ihren Aufzeichnungs- und Wiedergabeeigenschaften als auch ihrer Beeinflussung und Beeinflußbarkeit der Geräteteile, mit denen sie in Kontakt kommt, den Anforderungen optimal genügt.

Es wurde nun gefunden, daß magnetische Aufzeichnungsträger aus einem nichtmagnetischen Trägermaterial und einer darauf haftfest aufgebrachten Magnetschicht, bestehend aus feinteiligem ferromagnetischem Metallpulver, mindestens einem unmagnetischen verschleißfesten Metalloxidpulver, einem organischen Bindemittel sowie den üblichen Hilfsstoffen, die gestellte Aufgabe erfüllen, wenn sie neben dem ferromagnetischen Metallpulver, dem organischen Bindemittel und einem Dispergierhilfsmittel noch, bezogen auf die Menge des ferromagnetischen Metallpulvers,

1) 5 bis 20 Gew.% mindestens eines unmagnetischen Metalloxidpulvers, ausgewählt aus der Gruppe, bestehend aus $Al_2O_3$, $ZrO_2$, alpha-$Fe_2O_3$ und $Cr_2O_3$,

2) 0,02 bis 1,0 Gew.% eines fluorierten Alkylesters auf der Basis von gegebenenfalls mit Seitenketten versehenen Polyetherketten mit Molgewichten von 700 bis 800,

3) 0,05 bis 1,0 Gew.% eines Silikonkautschuks auf der Basis von langkettigen substituierten oligomeren Siloxanen mit Molgewichten von über 1 500 und

4) 0,5 bis 5,0 Gew.% eines Homo- oder Copolymeren des N-Vinylpyrrolidons mit einem Molekulargewicht von unter 60 000

enthält.

Die für die erfindungsgemäßen Aufzeichnungsträger geeigneten unmagnetischen Metalloxidpulver sind bekannt. Es sind dies $Al_2O_3$, $ZrO_2$, alpha-$Fe_2O_3$ und $Cr_2O_3$. Die Durchschnittsgröße dieser in Kugelform vorliegenden Teilchen beträgt 0,1 bis 1,8, vorzugsweise 0,3 bis 1,5 µm. Sie werden in der angegebenen Menge, vorzugsweise in einer Menge von 8 bis 15 Gew.%, bezogen auf den Anteil des magnetischen Materials, entweder unmittelbar der zur Dispergierung vorgesehenen Mischung oder als getrennte Dispersion in dem für die Magnetschicht vorgesehenen Bindemittel vorbereitet und dann der

Dispersion des magnetischen Materials vor dem Aufbringen auf das Trägermaterial zugegeben.

Die in dem erfindungsgemäßen Aufzeichnungsträgers eingearbeitete Komponente (2) mit einem Fluorgehalt von 1 bis 10, bevorzugt 5 bis 8 Gew.% liegt in einer Konzentration von 0,02 bis 1, vorzugsweise 0,05 bis 0,5 Gew.%, bezogen auf das in dêr Magnetschicht vorhandene magnetische Material, vor.

Die Komponente (3) besteht aus einem Silikonkautschuk auf der Basis oligomerer Siloxane. Sie leiten sich bevorzugt von der Formel I

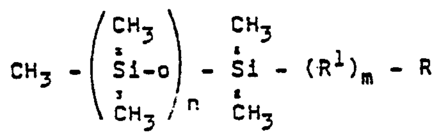

(I)

ab, wobei n und m gleiche oder verschiedene ganze Zahlen zwischen 20 und 25, $R^1$ $CH_2$- oder $CH_2$—O-Reste und R Carbonyl-, Hydroxyl- oder Epoxi-Gruppen darstellen. Die Menge der Komponente (3) in der Magnetschicht beträgt 0,05 bis 1,0, vorzugsweise 0,1 bis 5,0 Gew.%, bezogen auf das magnetische Material.

Die in den erfindungsgemäßen magnetischen Aufzeichnungsträgern enthaltenden Homo- und Copolymeren des N-Vinylpyrrolidons (Komponente (4)) gehören nicht zur Klasse der Bindemittel. Sie sind zwar filmbildend, eignen sich jedoch nicht zur Herstellung selbsttragender Schichten. Das Molekulargewicht dieser Polymeren ist kleiner als 60 000, bevorzugt kleiner 20 000. Ihre Herstellung durch Polymerisation des N-Vinylpyrrolidons ist allgemeiner Stand der Technik. Neben den Homopolymeren des N-Vinylpyrrolidons sind dessen Copolymerisate mit Comonomeren, wie Vinylester von Monocarbonsäuren mit 2 bis 9 C-Atomen, Vinylether, Allylalkohol und dessen Ester mit Monocarbonsäuren mit 2 bis 9 C-Atomen, Acrylsäure, Methacrylsäure, Maleinsäure, Acrylnitril oder Styrol für die erfindungsgemäßen magnetischen Aufzeichnungsträger geeignet. Insbesondere hat sich ein N-Vinylpyrrolidon-Polymer aus 0 bis 50 Gew.% Vinylacetat oder 0 bis 50 Gew.% Vinylpropionat oder 0 bis 50 Gew.% Acrylsäure und 50 bis 100 Gew.% N-Vinylpyrrolidon als vorteilhaft erwiesen. Der Anteil der N-Vinylpyrrolidon-Homo- oder Copolymeren in der Magnetschicht der erfindungsgemäßen Aufzeichnungsträger beträgt zwischen 0,5 und 50, insbesondere zwischen 0,8 und 30 Gew.%, bezogen auf die Menge an magnetischem Material.

Die übrige Zusammensetzung und die Herstellung der erfindungsgemäßen magnetischen Aufzeichnungsträger entspricht dem an sich bekannten Vorgehen.

Als magnetisches Material wird ein feinteiliges ferromagnetisches Metallpulver eingesetzt. Es besteht vorwiegend aus Eisen, Kobalt und/oder Nickel. Bevorzugt ist ein im wesentlichen aus Eisen bestehendes Pulver, das aus nadelförmigen Einzelteilchen mit einer durchschnittlichen Teilchenlänge von 0,1 bis 1,0 µm und einem mittleren Längen-zu-Dichtenverhältnis von 4 : 1 bis 20 : 1. Die Oberfläche der Teilchen nach BET beträgt vorzugsweise mindestens 30 $m^2/g$ und die Koerzitivfeldstärke erreicht Werte zwischen 60 und 100 kA/m, vorzugsweise über 92 kA/m.

Die organischen Bindemittel, die für die Herstellung der Magnetschichten verwendet werden, sind Polyvinylformale, Polyurethanelastomere, Mischungen von Polyisocyanaten und höhermolekularen Polyhydroxylverbindungen und Vinylchlorid-Polymerisate mit über 60 % an Vinylchlorid-Molekülbausteinen, z. B. Vinylchlorid-Copolymerisate mit Vinylestern von Monocarbonsäuren mit 2 bis 9 C-Atomen, Estern von aliphatischen Alkoholen mit 1 bis 9 C-Atomen und ethylenisch ungesättigten Carbonsäuren mit 3 bis 5 C-Atomen, wie die Ester der Acrylsäure, Methacrylsäure oder Maleinsäure, oder diesen Carbonsäuren selbst als Comonomere sowie hydroxylgruppenhaltige Vinylchlorid-Copolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von Polyurethanelastomeren mit Polyvinylformalen, Phenoxyharzen und PVC-Copolymerisaten der angegebenen Zusammensetzung. Bevorzugte Bindemittel sind Polyvinylformal-Binder, Polyurethanelastomer-Abmischungen der genannten Art, vor allem mit Polyvinylformalen. Als Polyurethanelastomer-Binder werden handelsübliche elastomere Polyesterurethane aus Adipinsäure, 1,4-Butandiol und 4,4'-Diisocyanatodiphenylmethan bevorzugt angewandt.

Als organische Lösungsmittel eignen sich für die Herstellung der Dispersion die hierfür bekannten organischen Lösungsmittel, insbesondere aromatische Kohlenwasserstoffe, wie Benzol, Toluol oder Xylol, Alkohole, wie Propanol oder Butanol, Ketone, wie Aceton oder Methylethylketon, Ether, wie Tetrahydrofuran oder Dioxan, sowie Gemische solcher Lösungsmittel und Lösungsmittelgemische.

Die Dispersion enthalten weitere Zusatzstoffe zur Herstellung der Magnetschichten, wie insbesondere Dispergierhilfsmittel, beispielsweise Lecithine oder langkettige Phosphorsäureester.

Die Herstellung der Magnetschichten erfolgt in bekannter Weise. Hierzu wird das magnetische Material mit dem Bindemittel und ausreichend Lösungsmittel in einer Dispergiermaschine, z. B. einer Kugelmühle oder einer Rührwerksmühle, unter Zusatz des Dispergierhilfsmittels und den weiteren Zusatzstuffen dispergiert. Zur Einstellung des zweckmäßigen Bindemittel-Pigment-Verhältnisses kann

das Bindemittel der Mischung entweder in festem Zustand oder in Form von 20- bis 60-prozentigen Lösungen zugegeben werden.

Die Magnetdispersion wird nun mit Hilfe üblicher Beschichtungsmaschinen, z. B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 µm und insbesondere von 6 bis 36 µm. Bevor die noch flüssige Beschichtungsmischung auf dem Träger getrocknet wird, was zweckmäßigerweise bei Temperaturen von 50 bis 90 °C während 2 bis 5 Minuten geschieht, werden die anisotropischen Magnetteilchen durch die Einwirkung eines Magnetfeldes entlang der vorgesehenen Aufzeichnungsrichtung orientiert. Anschließend werden die Magnetschichten auf üblichen Maschinen durch Hindurchführen zwischen geheizten und polierten Walzen, gegebenenfalls bei Anwendung von Druck, bei Temperaturen von 50 bis 100 °C, vorzugsweise 60 bis 80 °C, geglättet und verdichtet. Die Dicke der Magnetschicht beträgt im allgemeinen 2 bis 20 µm, vorzugsweise 3 bis 15 µm.

Die erfindungsgemäßen magnetischen Aufzeichnungsträger zeichen sich durch einen gleichmäßige und homogene Beschichtung aus. Die Schichtoberfläche ist glatt mit Rauhigkeiten ($R_Z$) unter 0,15 µm und ohne Defekte, wie Warzen und ähnliches. Besonders hervorzuheben ist die Kratzfestigkeit der Schicht. Diese Verbesserungen der Schichtqualität wirken sich vor allem beim Einsatz der erfindungsgemäßen Aufzeichnungsträger als Videobänder aus. Auf diese Weise lassen sich verbesserte Signal/Rauschverhältnisse und ein verbessertes Modulationsrauschen erzielen, sowie Standbildfestigkeit und Dauerlaufeigenschaften wesentlich anheben.

Die Erfindung wird anhang der folgenden Beispiele im Vergleich zu Versuchen nach dem Stand der Technik näher erläutert. Die in den Beispielen und Vergleichsversuchen genannten Teile und Prozente beziehen sich, soweit nicht anderes angegeben ist, auf das Gewicht.

Vergleichsversuch 1

700 Teile eines nadelförmigen Eisenpulvers mit einer mittleren Teilchenlänge von 0,3 µm und einer Koerzitivfeldstärke von 99 kA/m wurden zusammen mit 91 Teilen kugelförmigem $Al_2O_3$-Pulver mit einem mittleren Teilchendurchmesser von 0,4 µm in 722,8 Teilen einer 13 %igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan, 201,3 Teilen einer 20 %igen Lösung eines Phenoxiharzes aus Bisphenol A und Epichlorhydrin mit einem mittleren Molgewicht von 30 000 und einem Hydroxylgruppengehalt von 6 % im obengenannten Lösungsmittelgemisch sowie weiteren 264,1 Teilen dies Lösungsmittelgemisches in einer 6 000 Volumenteile fassenden, mit 2 340 Teilen Keramikkugeln gefüllten Rührwerkskugelmühle unter Zusatz von 3,5 Teilen Stearinsäure und 42 Teilen eines Dispergierhilfsmittels auf der Basis einer Mischung eines ethoxylierten Monophosphorsäureesters und dem Salz eines Sulfobernsteinsäureethylhexylesters 46 Stunden dispergiert. Anschließend wurden 23,7 Teilen Methylstearat zugeführt und nochmals 5 Stunden dispergiert. Nach Beendigung der Dispergierung wurden 58 Teile einer 50 %igen Lösung eines Triisocyanats, gefertigt aus 3 Molen Toluylendiisocyanat und 1 Mol 1,1,1-Trimethylolpropan in Ethylacetat, hinzugefügt und weitere 15 Minuten gerührt. Nach dem Filtrieren der Dispersion wurde diese schichtförmig auf eine 10 µm dicke Polyethylenterephthalatfolie unter anschließender Ausrichtung der Magnetpartikel mittels eines Permanentmagneten aufgetragen. Nach dem Trocknen wurde die 3 µm dicke Magnetschicht durch Hindurchführen zwischen beheizten Walzen unter Druck (60 °C, Liniendruck 200 kg/cm) geglättet und die beschichtete Folienbahn in 1/2 Zoll breite Bänder geschnitten. An diesen Bändern wurde mit V 2 000-Videorecorder der Fa. Philips Dauerlauf und Standbildfertigkeit bestimmt.

Dauerlauf

Es wird die Anzahl der Stunden bis zum ersten Pegeleinbruch (20 dB und 15 µsec) beim Spielbetrieb einer mit dem 1/2 Zoll breiten Magnetband gefüllten Videocassette für das System V 2 000 bestimmt.

Standbildfestigkeit

Die Angabe der Dauerstandzeit ist die Zeitspanne (in Minuten), in der eine Bildaufzeichnung auf einem handelsüblichen V 2 000-Recorder als Standbild, d. h. bei stehendem Magnetband und rotierendem Kopfrad, bis zum ersten Pegeleinbruch (20 dB und 15 µsec) wiedergegeben werden kann.

Signal-Rauschabstand

Verhältnis des Luminanzsignals eines 100 % Weißbildes zum Rauschpegel, gemessen mit dem Störspannungsmesser UPSF der Firma Rohde und Schwarz (> 100 kHz).

Die Meßergebnisse sind in der Tabelle angegeben.

Beispiele 1 bis 3

Es wurde wie in Vergleichsversuch 1 beschrieben verfahren, jedoch wurden dem Dispergieransatz die in der Tabelle angegebenen Mengen an Aluminiumoxid mit einem mittleren Teilchendurchmesser von 0,4 µm, ein Alkylester mit einem Fluorgehalt von 6 % und einem Molekulargewicht von 740, ein Silikonkautschuk gemäß Formel I mit n = 20, m = 23, $R^1 = CH_2$ und R = Epoxid sowie ein Copolymeren aus 60 Molprozent N-Vinylpyrrolidon und 40 Molprozent Vinylacetat mit einem Molgewicht von 20 000 zugesetzt. Die Meßergebnisse sind in der Tabelle angegeben.

Vergleichsversuche 2 bis 7

Es wurde wie in Vergleichsversuch 1 beschrieben verfahren, jedoch wurden dem Dispergieransatz die in der Tabelle angegeben Substanzen in den genannten Mengen zugesetzt. Die Meßergebnisse sind in der Tabelle angegeben.

Tabelle

| | $Al_2O_3$ % | fluoriert. Alkylester % | Silikon-kautschuk % | Polyvinyl-pyrrolidon % | S/N [dB] | Standbild [min.] | Dauerlauf [Std.] |
|---|---|---|---|---|---|---|---|
| Vergl.Vers. 1 | 13 | 0 | 0 | 0 | +8,0 | 1 | 1 |
| Vergl.Vers. 2 | 3 | 0,1 | 0,5 | 0,8 | +9,0 | 0 | 0 |
| Beispiel 1 | 16 | 0,1 | 0,3 | 1,4 | +5,0 | >60 | >50 |
| Beispiel 2 | 11 | 0,1 | 0,5 | 0,8 | +9,0 | >60 | >50 |
| Vergl.Vers. 3 | 11 | 0 | 0,5 | 0,8 | +9,0 | 10 | 5 |
| Vergl.Vers. 4 | 11 | 0,3 | 0 | 0,8 | +9,5 | 10 | 3 |
| Vergl.Vers. 5 | 11 | 0,3 | 0,1 | 0 | +7,5 | 30 | 10 |
| Beispiel 3 | 8 | 0,1 | 0,1 | 1,6 | +9,5 | >60 | >50 |
| Vergl.Vers. 6 | 8 | 1,1 | 0,1 | 0,8 | +9,0 | blockt | blockt |
| Vergl.Vers. 7 | 8 | 0,1 | 1,1 | 0,8 | +8,5 | Kopf läuft aus der Spur | 0 |

**Patentanspruch**

Magnetische Aufzeichnungsträger aus einem nichtmagnetischen Trägermaterial und einer darauf haftfest aufgebrachten Magnetschicht, bestehend aus feinteiligem ferromagnetischen Metallpulver, mindestens einem unmagnetischen verschleißfesten Metalloxidpulver, einem organischen Bindemittel sowie den üblichen Hilfsstoffen, dadurch gekennzeichnet, daß die Schicht neben dem ferromagnetischen Metallpulver, dem organischen Bindemittel, den üblichen Hilfsstoffen und einem Dispergierhilfsmittel noch, bezogen auf die Menge an ferromagnetischem Metallpulver,

1) 5 bis 20 Gew.% mindestens eines unmagnetischen Metalloxidpulvers, ausgewählt aus der Gruppe bestehend aus $Al_2O_3$, $ZrO_2$, $\alpha$-$Fe_2O_3$ und $Cr_2O_3$,

2) 0,02 bis 1,0 Gew.% eines fluorierten Alkylesters auf der Basis von gegebenenfalls mit Seitenketten versehenen Polyetherketten mit Molgewichten von 700 bis 800,

3) 0,05 bis 1,0 Gew.% eines Silikonkautschuks auf der Basis von langkettigen substituierten oligomeren Siloxanen mit Molgewichten von über 1 500 und

4) 0,5 bis 5,0 Gew.% eines Homo- oder Copolymeren des N-Vinylpyrrolidons mit einem Molekulargewicht von unter 60 000

enthält.

**Claim**

A magnetic recording medium comprising a non-magnetic base and, firmly bonded thereto, a magnetic layer consisting of finely divided ferromagnetic metal powder, one or more non-magnetic abrasion-resistant metal oxide powders, an organic binder and conventional assistants, wherein the layer contains, in addition to the ferromagnetic metal powder, the organic binder, conventional assistants and a dispersant,

1) from 5 to 20 % by weight of one or more non-magnetic metal oxide powders selected from the group consisting of $Al_2O_3$, $ZrO_2$, $\alpha$-$Fe_2O_3$ and $Cr_2O_3$,

2) from 0.02 to 1.0 % by weight of a fluorinated alkyl ester which is based on polyether chains, which may or may not possess side chains, and has a molecular weight of from 700 to 800,

3) from 0.05 to 1.0 % by weight of a silicone rubber based on long-chain substituted oligomeric siloxanes having a molecular weight greater than 1,500, and

4) from 0.5 to 5.0 % by weight of a homopolymer or copolymer of N-vinylpyrrolidone, having a molecular weight of less than 60,000,

the percentages being based on the amount of ferromagnetic metal powder.

**Revendication**

Support d'enregistrement magnétique en un matériau support non magnétique et une couche magnétique appliquée dessus de façon adhérente et constituée d'une poudre métallique ferromagnétique finement divisée, d'au moins une poudre d'oxyde métallique résistant à l'usure et non magnétique, d'un liant organique ainsi que d'auxiliaires usuels, caractérisé par le fait que, outre la poudre métallique ferromagnétique, le liant organique, les auxiliaires usuels et un auxiliaire de dispersion, la couche contient encore, rapportés à la quantité de poudre métallique ferromagnétique,

1) 5 à 20 % en poids d'au moins une poudre d'oxyde métallique non magnétique choisie dans le groupe constitué de $Al_2O_3$, $ZrO_2$, $\alpha$-$Fe_2O_3$ et $Cr_2O_3$,

2) 0,02 à 1,0 % en poids d'un ester alkylique fluoré à base de chaînes polyéther, éventuellement munies de chaînes latérales, de poids moléculaires de 700 à 800,

3) 0,05 à 1,0 % en poids d'un caoutchouc silicone à base de siloxanes oligomères substitués à longue chaîne, de poids moléculaires supérieurs à 1 500 et

4) 0,5 à 5,0 % en poids d'un homo- ou copolymère du N-vinylpyrrolidone de poids moléculaires inférieurs à 60 000.